# EUROPEAN PATENT APPLICATION

(11) **EP 2 439 914 A2**
(43) Date of publication of application: **11.04.2012**
(21) Application number: 11007081.0
(22) Date of filing: 31.08.2011
(51) Int. Cl.: H04M 1/725, H04M 1/60, H04L 29/06, H04W 4/04

(54) **Operational method between on-board unit and mobile device and on-board unit system thereof**

(30) Priority: 11.10.2010 US 391688 P
(71) Applicant: HTC Corporation, Taoyuan County 330 (TW)
(72) Inventor: Chen, Shang-Shian, Taoyuan City Taoyuan County 330 (TW); Chien, Ho-Sung, Taoyuan City Taoyuan County 330 (TW)
(74) Representative: Wimmer, Hubert

(57) **Abstract**

An operational method between an on-board unit (OBU) and a mobile device is disclosed. The operational method includes connecting the OBU and the mobile device with a data link; and activating the OBU and the mobile device into a main mode for interaction.

## Description

### Cross Reference To Related Applications

This application claims the benefit of U.S. Provisional Application No. 61/391, 688, filed on Oct. 11, 2010 and entitled "HTC Mode between OBU and the mobile device", the contents of which are incorporated herein by reference.

### Background of the Invention

### 1. Field of the Invention

The present invention relates to an operational method between an on-board unit (OBU) and a mobile device, and more particularly, to an operational method between an OBU and a mobile device capable of extending functionality of the OBU by connecting the OBU with the mobile device via a data link.

### 2. Description of the Prior Art

Formerly, an on-board unit (OBU) in the automobile only has very simplified functionality, such as FM/AM channel or CD player. Nowadays, with consumer electronics technology rapidly advancing/growing up, if a mobile device, such as a mobile phone, a personal digital assistant (PDA) or a tablet computer, is well-considered/connected together with an OBU, there will be many use cases or scenarios which could enrich user experience of automotive driver/passengers.

Thus, it is a goal to improve functionality of the OBU in the industry.

### Summary of the Invention

It is therefore an objective of the present invention to provide an operational method between an OBU and a mobile device capable of extending functionality of the OBU by connecting the OBU with the mobile device via a data link.

The present invention discloses an operational method between an on-board unit (OBU) and a mobile device. The operational method includes connecting the OBU and the mobile device with a data link; and activating the OBU and the mobile device into a main mode for interaction.

The present invention further discloses an on-board unit (OBU) system. The OBU system includes an OBU; a mobile device; and a data link, for connecting the OBU with the mobile device; wherein the OBU and the mobile device are activated into a main mode for operations.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of an operational process between an OBU and a mobile device according to an embodiment of the present invention.

FIG. 2 is a schematic diagram of a main mode for operations between the OBU and the mobile device according to an embodiment of the present invention.

FIG. 3 is a schematic diagram of an enable and disable process of a projector mode shown in FIG. 2 according to an embodiment of the present invention.

FIG. 4 is a schematic diagram of an enable and disable process of a mass storage mode shown in FIG. 2 according to an embodiment of the present invention.

FIG. 5 is a schematic diagram of an enable and disable process of an internet sharing mode shown in FIG. 2 according to an embodiment of the present invention.

### Detailed Description

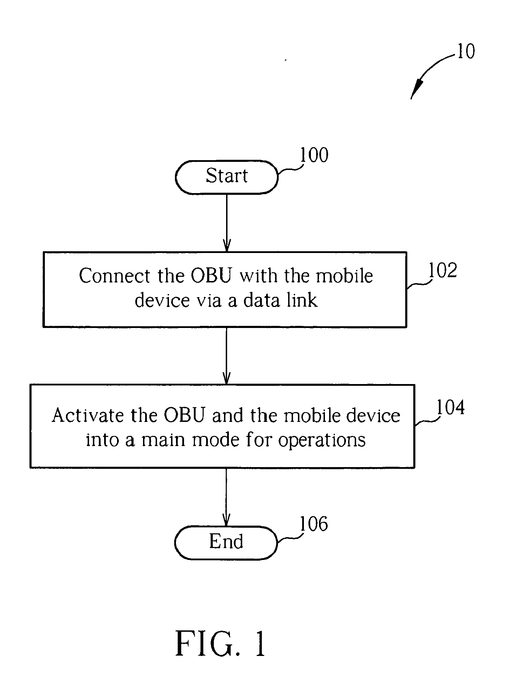

Please refer to FIG.1, which is a schematic diagram of an operational process 10 between an on-board unit (OBU) and a mobile device according to an embodiment of the present invention, wherein the mobile device can be a mobile phone, a personal digital assistant (PDA), a tablet computer, etc. The operational process 10 includes the following steps:

Step 100: Start.

Step 102: Connect the OBU with the mobile device via a data link.

Step 104: Activate the OBU and the mobile device into a main mode for operations.

Step 106: End.

According to the operational process 10, after connecting the OBU with the mobile device via a data link such as a wireless data link or a wired data link, the OBU, the mobile device and the data link can be considered as an OBU system, and both the OBU and the mobile device can be activated into a main mode for operations through a bottom or touch screen on the OBU or the mobile device. The main mode further includes a projector mode, a mass storage mode, and an internet sharing mode for different operationaluser scenarios and the capabilities of OBU and mobile device, wherein at least one of the projector mode, the mass storage mode, and the internet sharing mode can be enabled to achieve respective merits. As a result, the present invention can extend functionality of the OBU by connecting the OBU with the mobile device via the data link.

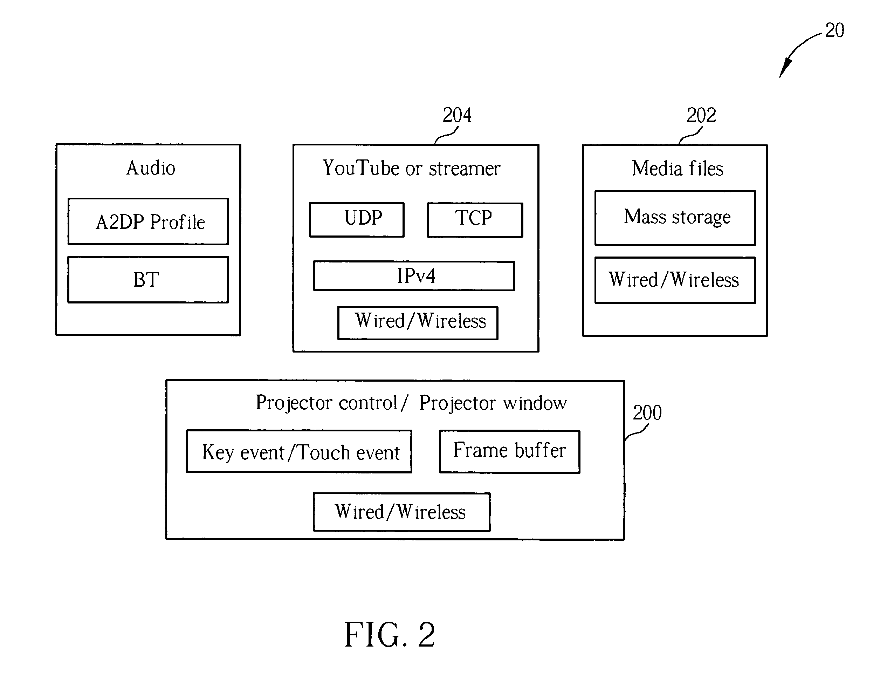

In detail, please refer to FIG. 2, which is a schematic diagram of a main mode 20 for operations between the OBU and the mobile device according to an embodiment of the present invention. The main mode 20 includes a projector mode 200, a mass storage mode 202, and an internet sharing mode 204. As shown in FIG. 2, during the main mode 20, an A2DP profile supports audio data transferring between the OBU and the mobile device via a wireless Bluetooth (BT) data link.

When the projector mode 200 is enabled via the OBU, the OBU behaves as a projector for displaying display contents of the mobile device by receiving the display contents from a frame buffer via a wired/wireless data link, wherein the display contents of the mobile device displayed on the OBU can be cropped or full screen. Besides, the mobile device can be accessed via accessing a touch panel or input buttons of the OBU, so as to utilize various programs and applications of the mobile device via the OBU. Under such a situation, the OBU behaves as an input/output device for the mobile device. As a result, a driver or a passenger can access the programs and the applications of the mobile device from the OBU, and key events or touch events on the OBU is delivered to the mobile device through remote control or remote desktop mechanisms, so as to extend functionality of the OBU by utilizing the programs and the applications of the mobile device.

Moreover, when the mass storage mode 202 is enabled via the OBU, the mobile device behaves as a mass storage device for the OBU, such that the OBU can play media files and entertainment programs stored in the mobile device without too much display data transferring from the mobile device. As a result, the present invention can extend functionality of the OBU by utilizing the mobile device as a mass storage device to play the programs and the applications stored in the mobile device.

Furthermore, when the internet sharing mode 204 is enabled via the OBU, the mobile device behaves as a tether modem, e.g. USB modem, for the OBU, such that the OBU can connect to internet via the mobile device, e.g. User Datagram Protocol (UDP), Transmission Control Protocol (TCP), IPv4. As a result, the present invention can extend functionality of the OBU by utilizing the mobile device as a tether modem to connect to internet.

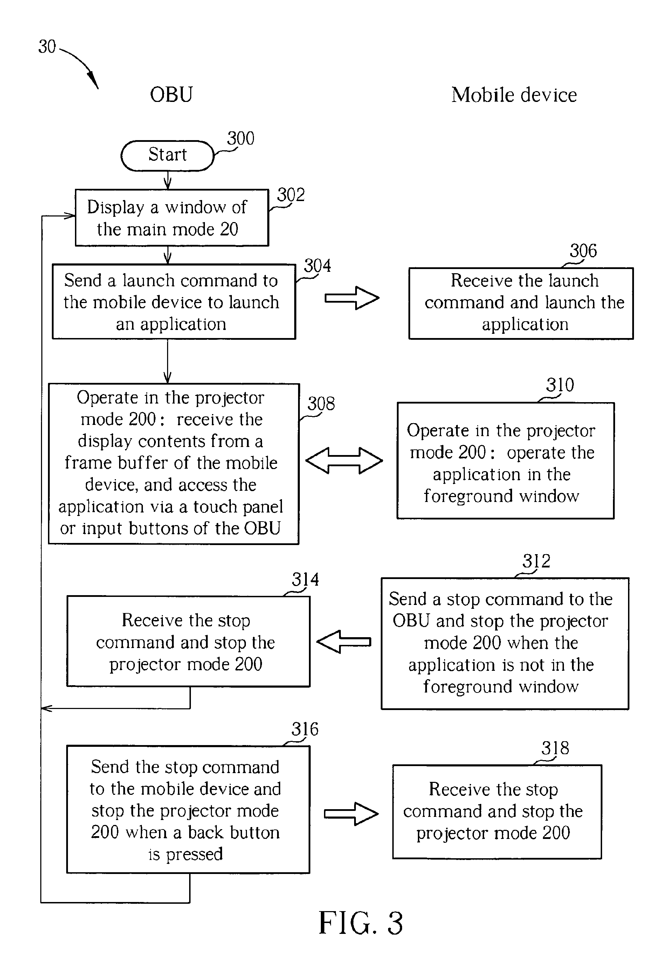

For example, please refer to FIG. 3-5, which are schematic diagrams of enable and disable processes 30-50 of the projector mode 200, the mass storage mode 202, and the internet sharing mode 204 shown in FIG. 2 according to an embodiment of the present invention. As shown in FIG. 3, the enable and disable process 30 of the projector mode 200 includes the following steps:

Step 300: Start.

Step 302: Display a window of the main mode 20.

Step 304: Send a launch command to the mobile device to launch an application.

Step 306: Receive the launch command and launch the application.

Step 308: Operate in the projector mode 200: receive the display contents from a frame buffer of the mobile device, and access the application via a touch panel or input buttons of the OBU.

Step 310: Operate in the projector mode 200: operate the application in the foreground window.

Step 312: Send a stop command to the OBU and stop the projector mode 200 when the application is not in the foreground window.

Step 314: Receive the stop command and stop the projector mode 200; go to step 302.

Step 316: Send the stop command to the mobile device and stop the projector mode 200 when a back button is pressed; go to step 302.

Step 318: Receive the stop command and stop the projector mode 200.

According to the enable and disable process 30, during the main mode 20, the OBU can display a window of the main mode 20 showing a plurality of links corresponding to a plurality of applications, all applications, the mass storage mode 202 and the internet sharing mode 204. During an enable process of the projector mode 200, i.e. steps 304-310, the user can select a link corresponding to an application, and the OBU sends a launch command to the mobile device to launch the application, such that the mobile device can receive the launch command and launch the application. Then, the OBU operates in the projector mode 200, i.e. receive the display contents from a frame buffer of the mobile device and access the application via a touch panel or input buttons of the OBU, and the mobile device also operate in the projector mode 200, i.e. operate the application in the foreground window. Noticeably, the user can select a link corresponding to all applications, so as to select applications not corresponding to the plurality of links shown in the window of the main mode 20. As a result, the present invention can extend functionality of the OBU by utilizing the programs and the applications of the mobile device in the projector mode 200.

On the other hand, during one disable process of the projector mode 200, i.e. steps 312-314, when the application is not in the foreground window, e.g. the user closes the application via the OBU or the user does not user the application on the OBU, the mobile device sends a stop command to the OBU, and stops the projector mode 200. Then, the OBU receives the stop command, stops the projector mode 200 and then goes back to display the window of the main mode 20.

During another disable process of the projector mode 200, i.e. steps 316-318, when a back button of the OBU is pressed by the user, the OBU sends the stop command to the mobile device, stops the projector mode 200 and then goes back to display the window of the main mode 20. Then, the mobile device receives the stop command and stops the projector mode 200. As a result, the projector mode 200 can be disabled by the mobile device or the OBU.

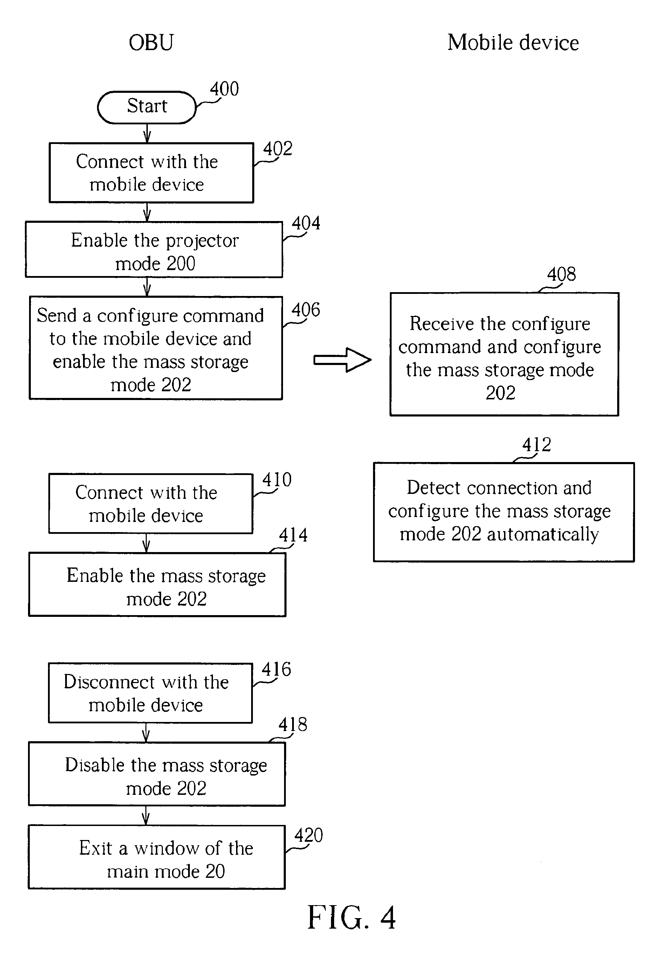

For another example, as shown in FIG. 4, the enable and disable process 40 of the mass storage mode 202 includes the following steps:

Step 400: Start.

Step 402: Connect with the mobile device.

Step 404: Enable the projector mode 200.

Step 406: Send a configure command to the mobile device and enable the mass storage mode 202.

Step 408: Receive the configure command and configure the mass storage mode 202.

Step 410: Connect with the mobile device.

Step 412: Detect connection and configure the mass storage mode 202 automatically.

Step 414: Enable the mass storage mode 202.

Step 416: Disconnect with the mobile device.

Step 418: Disable the mass storage mode 202.

Step 420: Exit a window of the main mode 20.

According to the enable and disable process 40, during one enable process of the mass storage mode 202, i.e. steps 402-408, when the OBU is connected with the mobile device and enable the projector mode 200, the OBU can send a configure command to the mobile device and enable the mass storage mode 202. Then, the mobile device receives the configure command and configures the mass storage mode 202. Under such a situation, the projector mode 200 and the mass storage mode 202 are both enabled between the OBU and the mobile device, such that the user can access the mobile device via the OBU without too much display data transferring from the mobile device. Noticeably, in another embodiment, the user can select a link corresponding to the mass storage mode 202 shown in the window of the main mode 20, to enable the mass storage mode 202 between the OBU and the mobile device via the OBU.

During another enable process of the mass storage mode 202, i.e. steps 410-414, after the OBU is connected with the mobile device, the mobile device detects connection and configures the mass storage mode 202 automatically. Then, the OBU enables the mass storage mode 202. As a result, the projector mode 200 can be enabled by the OBU or the mobile device, so as to extend functionality of the OBU by utilizing the mobile device as a mass storage device to play the programs and the applications stored in the mobile device.

On the other hand, during a disable process of the mass storage mode 202, i.e. steps 416-420, when the OBU is disconnected with the mobile device, the OBU disables the mass storage mode 202, and then exits a window of the main mode 20.

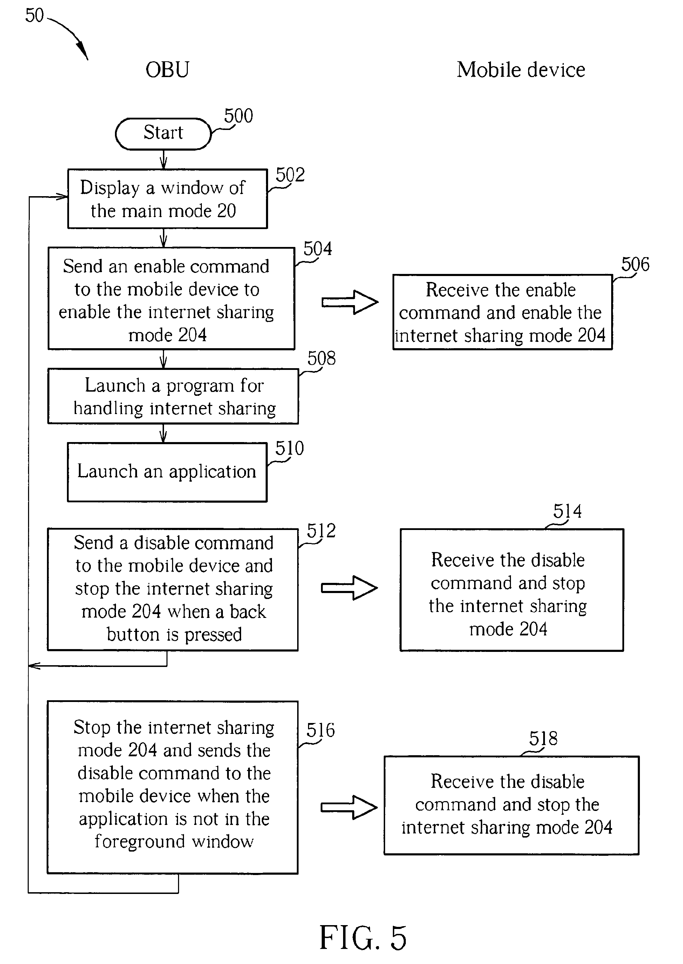

For another example, as shown in FIG. 5, the enable and disable process 50 of the internet sharing mode 204 includes the following steps:

Step 500: Start.

Step 502: Display a window of the main mode 20.

Step 504: Send an enable command to the mobile device to enable the internet sharing mode 204.

Step 506: Receive the enable command and enable the internet sharing mode 204.

Step 508: Launch a program for handling internet sharing.

Step 510: Launch an application.

Step 512: Send a disable command to the mobile device and stop the internet sharing mode 204 when a back button is pressed; go to step 502.

Step 514: Receive the disable command and stop the internet sharing mode 204.

Step 516: Stop the internet sharing mode 204 and sends the disable command to the mobile device when the application is not in the foreground window; go to step 502.

Step 518: Receive the disable command and stop the internet sharing mode 204.

According to the enable and disable process 50, during the main mode 20, the OBU can display a window of the main mode 20 showing a plurality of links corresponding to a plurality of applications, all applications, the mass storage mode 202 and the internet sharing mode 204. During an enable process of the internet sharing mode 204, i.e. steps 504-510, the user can select a link corresponding to the internet sharing mode 204, and the OBU sends an enable command to the mobile device to enable the internet sharing mode 204, such that the mobile device can receive the enable command and enable the internet sharing mode 204. Then, the OBU launches a program for handling internet sharing via utilizing the mobile device as a tether modem, and thus can launch an application such as YouTube or Browser for operations. As a result, the present invention can extend functionality of the OBU by utilizing the mobile device as a tether modem to connect to internet.

On the other hand, during one disable process of the internet sharing mode 204, i.e. steps 512-514, when a back button of the OBU is pressed by the user, the OBU sends a disable command to the mobile device, stops the internet sharing mode 204 and then goes back to display the window of the main mode 20. Then, the mobile device receives the disable command and stops the internet sharing mode 204.

During another disable process of the internet sharing mode 204, i.e. steps 516-518, when the application is not in the foreground window, e.g. the user closes the application via the OBU or the user does not user the application on the OBU, the OBU stops the internet sharing mode 204, sends the disable command to the mobile device and then goes back to display the window of the main mode 20. Then, the mobile device receives the disable command and stops the internet sharing mode 204. As a result, the internet sharing mode 204 can be disabled via the OBU.

Noticeably, the spirit of the present invention is to connect the OBU with the mobile device via the data link and activate the OBU and the mobile device into the main mode for operations, so as to extend functionality of the OBU. Those skilled in the art should make modifications or alterations accordingly. Noticeably, in the above embodiment, the main mode includes the projector mode 200, the mass storage mode 202, and the internet sharing mode 204 for different operationaluser scenarios and the capabilities of OBU and mobile device, and the projector mode 200, the mass storage mode 202, and the internet sharing mode 204 can be enabled separately or in any combination while retaining respective merits. However, the main mode can further include other modes for utilizing the mobile device to extend functionality of the OBU.

In the prior art, the conventional on-board unit (OBU) in the automobile only has very simplified functionality, such as FM/AM channel or CD player. In comparison, the present invention is to connect the OBU with the mobile device via the data link and activate the OBU and the mobile device into the main mode for operations, so as to extend functionality of the OBU by utilizing the mobile device in the projector mode 200, the mass storage mode 202, or the internet sharing mode 204.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. An operational method between an on-board unit (OBU) and a mobile device, the operational method comprising:
connecting the OBU with the mobile device via a data link; and
activating the OBU and the mobile device into a main mode for operations.

2. The operational method of claim 1, wherein the main mode further comprises a projector mode, a mass storage mode, and an internet sharing mode.

3. The operational method of claim 2 further comprising enabling at least one of the projector mode, the mass storage mode, and the internet sharing mode.

4. The operational method of claim 2 further comprising:
enabling the projector mode via the OBU;
displaying display contents of the mobile device on the OBU; and
accessing the mobile device via the OBU.

5. The operational method of claim 4, wherein the step of enabling the projector mode via the OBU further comprising:
enabling the projector mode via a link of the OBU;
wherein the link is corresponding to an application of the mobile device.

6. The operational method of claim 5 further comprising:
disabling the projector mode when the application of the mobile device is not in a foreground window.

7. The operational method of claim 2 further comprising:
enabling the mass storage mode; and
the mobile device behaving as a mass storage device for the OBU.

8. The operational method of claim 2 further comprising:
enabling the internet sharing mode; and
the mobile device behaving as a tether modem for the OBU.

9. An on-board unit (OBU) system, comprising:
an OBU;
a mobile device; and
a data link, for connecting the OBU with the mobile device;
wherein the OBU and the mobile device are activated into a main mode for operations.

10. The OBU system of claim 9, wherein the main mode further comprises a projector mode, a mass storage mode, and an internet sharing mode, and at least one of the projector mode, the mass storage mode, and the internet sharing mode is enabled.

11. The OBU system of claim 10, wherein the projector mode is enabled via the OBU; the OBU displays display contents of the mobile device, and the mobile device is accessed via the OBU.

12. The OBU system of claim 11, wherein the projector mode is enabled via a link of the OBU, and the link is corresponding to an application of the mobile device.

13. The OBU system of claim 12, wherein the projector mode is disabled when the application of the mobile device is not in a foreground window.

14. The OBU system of claim 10, wherein the mass storage mode is enabled, and the mobile device behaves as a mass storage device for the OBU.

15. The OBU system of claim 10, wherein the internet sharing mode is enabled, and the mobile device behaves as a tether modem for the OBU.
